# EUROPÄISCHE PATENTSCHRIFT

(11) **EP 2 394 148 B1**
(45) Veröffentlichungstag und Bekanntmachung des Hinweises auf die Patenterteilung: **08.11.2017**
(21) Anmeldenummer: 10702032.3
(22) Anmeldetag: 20.01.2010
(51) Int. Cl.: G01K 7/18, H01C 7/00, H01C 7/02, H01C 7/06

(54) **WIDERSTANDSTHERMOMETER MIT NICHTLEITFÄHIGEM ZIRCONIUMDIOXID**
RESISTANCE THERMOMETER COMPRISING NON-CONDUCTING ZIRCONIUM DIOXIDE
THERMOMETRE A RESISTANCE COMPRENANT DU DIOXYDE DE ZIRCONIUM NON CONDUCTEUR

(30) Priorität: 06.02.2009 DE 102009007940
(43) Veröffentlichungstag der Anmeldung: 14.12.2011
(73) Patentinhaber: HERAEUS SENSOR TECHNOLOGY GMBH, 63450 Hanau (DE)
(72) Erfinder: WIENAND, Karlheinz, 63741 Aschaffenburg (DE); ZINKEVICH, Matsvei, 63773 Goldbach (DE)
(74) Vertreter: Heraeus IP
(86) Internationale Anmeldenummer: PCT/EP2010/000307
(87) Internationale Veröffentlichungsnummer: WO 2010/089024

(56) Entgegenhaltungen:
- EP-A2- 0 488 503
- EP-A2- 0 909 950
- DE-A1-102006 012 088
- DE-A1-102007 023 434
- DE-C1- 10 210 772
- DE-C1- 19 540 194
- US-A- 5 366 766
- D.-J. KIM: "Effect of Ta2O5, Nb2O5, and HfO2 Alloying on the Transformability of Y2O3-Stabilized Tetragonal ZrO2" JOURNAL OF THE AMERICAN CERAMIC SOCIETY, Bd. 73, Nr. 1, 1990, Seiten 115-120, XP002583847
- S. RAGHAVAN ET AL: "Ta2O5/Nb2O5 and Y2O3 Co-doped Zirconias for Thermal Barrier Coatings" JOURNAL OF THE AMERICAN CERAMIC SOCIETY, Bd. 87, Nr. 3, 2004, Seiten 431-437, XP002583853
- J.W. FERGUS: "Doping and defect association in oxides for use in oxygen sensors" JOURNAL OF MATERIALS SCIENCE, Bd. 38, 2003, Seiten 4259-4270, XP002583854
- SKELTON D.C. ET AL: "A surface-science-based model for the selectivity of platinum-gold alloy electrodes in zirconia-based NOx sensors" SENSORS AND ACTUATORS B, Bd. 96, 2003, Seiten 46-52, XP002601926
- KIM D-J ET AL: "Phase stability and physical properties of cubic and tetragonal ZrO2 in the system ZrO2-Y2O3-Ta2O5", JOURNAL OF THE AMERICAN CERAMIC SOCIETY, BLACKWELL PUBLISHING, MALDEN, MA, US, vol. 74, no. 12, 1 December 1991 (1991-12-01), pages 3061-3065, XP002275561, ISSN: 0002-7820, DOI: 10.1111/J.1151-2916.1991.TB04302.X

## Beschreibung

Die Erfindung betrifft ein Widerstandsthermometer mit einem Messwiderstand in Form einer im wesentlichen aus einem Metall der Platingruppe bestehenden Widerstandsschicht in einer Dicke von 0,1 bis 10 µm, die auf einer elektrisch isolierenden Oberfläche eines Trägers mit einem Wärmeausdehnungskoeffizienten im Bereich von 8,5 bis 10,5 x 10⁻⁶/K aufgebracht ist und mit einer elektrisch isolierenden Abdeckschicht versehen ist.
DE 195 40 194 C1 offenbart ein Widerstandsthermometer, bei dem das Substrat aus Magnesiumtitanat besteht. Der Wärmeausdehnungskoeffizient des Magnesiumtitanats liegt im Bereich des Platins. Auf diese Weise werden gegenüber Substraten aus Aluminiumoxid Spannungen abgebaut und die Messgenauigkeit verbessert. Hierfür muss jedoch in Kauf genommen werden, dass Magnesiumtitanat offenporig ist und eine geringe Bruchfestigkeit besitzt.

DE 10 2007 023 434 offenbart ein Widerstansthermometer mit einem Messwiderstand in Form einer 0,1 bis 10 µm dicken strukturierten Platinschicht, die auf einer elektrisch isolierenden Oberfläche (2) eines Substrats (1) aufgebracht ist und mit einer elektrisch isolierenden Abdeckschicht versehen ist, wobei das Substrat (1) oder dessen Oberfläche (2) Zirconiumdioxid enthält, welches mit einem Oxid eines dreiwertigen Metalls stabilisiert ist, wobei das dreiwertige Metall Yttrium ist.

Die Dokumente "Effect of Ta2O5, Nb2O5, anf HfO2 Alloying on the Transformability of Y2O3-Stabilized Tetragonal ZrO2", Dae-Joon Kim, J. Am. Ceram. Soc., 73 [1] 115-20 (1990), XP002583847, und "Ta2O5/Nb2O5 and Y2O3 Co-doped Zirconias for Thermal Barrier Coatings", Srinivasan Raghavan et al., J. Am. Ceram. Soc., 87 [3] 431-37 (2004), XP002583853, und "Phase Stability and Physical Properties of Cubic and Tetragonal ZrO2 ind the System ZrO2-Y2O3-Ta2O5", Dae-Joon Kim et al., J. Am. Ceram. Soc. 74 [12] 3061-65 (1991), XP002275561, sowie "Doping and defect association in oxides for use in oxygen sensors", J.W. Fergus, Journal of materials science 38 (2003), 4259-4270, XP002583854, offenbaren Legierungen aus Zirconia, Yttria und Titania oder Niobia.

Die Aufgabe der vorliegenden Erfindung besteht darin, unter Beibehaltung der Langzeitstabilität oberhalb von 500°C eine verbesserte Reproduzierbarkeit und eine verbesserte Ausbeute in der Produktion zu erreichen.
Zur Lösung der Aufgabe wird eine Widerstandsschicht aus Platin auf einem Zirconiumdioxidsubstrat aufgetragen, welches mit einem drei- und einem fünfwertigen Metall stabilisiert mit einem Gehalt von 20-40 Mol-% Stabilisator, wobei das dreiwertige Metall Yttrium ist, und das fünfwertige Metall Tantal oder Niob ist.

Die Lösung der Aufgabe erfolgt mit den Merkmalen der unabhängigen Ansprüche 1 und 2. Bevorzugte Ausführungen sind in den abhängigen Ansprüchen beschrieben.
Erfindungsgemäß wird die Erzeugung exakterer und reproduzierbarerer Strukturen ermöglicht.

Damit einhergehend werden genauere und reproduzierbarere Messungen ermöglicht. Diese Vorteile kommen insbesondere feineren Strukturen zugute. Damit zusammenhängend sind feinere Strukturen gegenüber Substraten auf Magnesiumtitanat-Basis konstruierbar.

Die hohe Reproduzierbarkeit und Genauigkeit werden durch eine glatte Oberfläche des Substrats ermöglicht. Vorzugsweise weist das Gefüge des Substrats hierzu eine Körnung mit einer durchschnittlichen Korngröße unter 1,5 µm auf. Bei üblicherweise mit Yttrium stabilisiertem Zirconiumdioxid als Substrat wird die Sauerstoffleitfähigkeit durch Zugabe von Tantal oder Niob unterdrückt. Die hohe Bruchfestigkeit wird durch einen Gehalt von 20-40 Mol-% Stabilisator, bezogen auf den gesamten Metallgehalt, insbesondere 25-35 Mol-%, erreicht, weil die Hochtemperatur-tetragonale Phase des Zirconiumdioxids erhalten bleibt.

Die mechanische Festigkeit wird auch durch Dotierung mit HfO₂ auf über 250 MPa gesteigert.

Insbesondere reproduziert sich bezüglich eines Platin-Messwiderstands die Kennlinie für Platin gemäß DIN IEC 751.

Vorzugsweise wird der Messwiderstand durch eine Abdeckung geschützt, insbesondere aus Glas oder einem mit Glaslot befestigten Keramikplättchen, vorteilhafterweise aus dem gleichen Material wie das Substrat.

Es ist sehr nützlich, dass ein erfindungsgemäßes Messelement die DIN-IEC-Kennlinie im Bereich von -200°C bis 850°C wiedergibt. Insbesondere ist bei einer Temperaturbelastung über 500°C eine hohe Standzeit erzielbar.

Ein bei Temperaturen über 500°C elektrisch isolierendes stabilisiertes Zirconiumdioxid weist mindestens zwei Metalloxide auf, die eine von der Wertigkeit 4 abweichende Wertigkeit aufweisen und sich im Durchschnitt zur Wertigkeit 4 ausgleichen, insbesondere äquimolare Mengen an drei- oder fünfwertigen Metalloxiden, nämlich Yttrium und Niob oder Tantal. Zur Verbesserung der mechanischen Substrateigenschaften eignen sich Zusätze, insbesondere Nanopulver von Hafniumdioxid oder Aluminiumoxid, insbesondere ATZ (aluminia toughened zirkonia) mit 10 bis 40 Gew.-% Aluminiumoxid. ATZ-Substrate aus Mischungen aus dem stabilisierten Zirconiumdioxid und Aluminiumoxid weisen eine besonders hohe Temperaturschockbeständigkeit auf.

Die Eignung für die Massenproduktion mit erfindungsgemäß hoher Messgenauigkeit bei hervorragender Reproduzierbarkeit zwischen 300°C und 1000° C, insbesondere über 500°C, drängt insbesondere bei hoher Temperaturschockresistenz Anwendungen in der Abgasbehandlung auf. Im Anwendungsbereich zwischen 300°C und 700°C besteht eine ausgezeichnete Langzeitstabilität.

### Ausführungsbeispiel 1

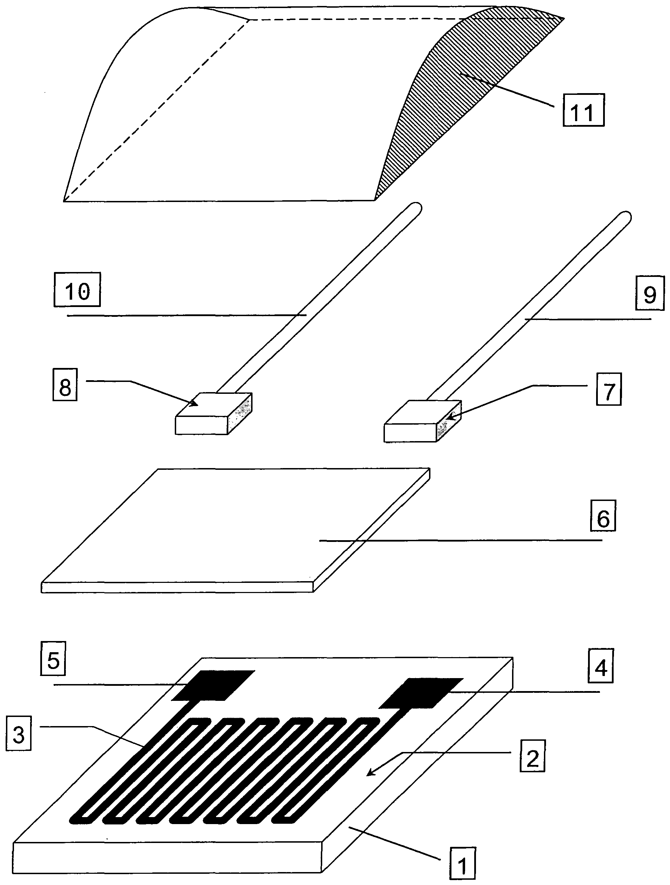

Fig. 1 zeigt einen Messwiderstand, bei dem die Widerstandsschicht 3 direkt auf der Oberfläche 2 eines elektrisch isolierenden Substrats 1 aufgebracht ist. Als Substrat 1 ist ein quaderförmiger Körper, bestehend aus Yttrium- und Tantalstabilisiertem Zirconiumdioxid (ZYTa). Zur vollständigen Stabilisierung des Zirconiumdioxids wird 16 mol-% Y und 16 mol-% Ta hinzugegeben. Die Herstellung des Substrats 1 erfolgt mittels Foliengießen mit anschließender Sinterung bei 1500°C. Damit werden 97% der theoretischen Dichte und die Bruchfestigkeit von 260 MPa erreicht, so dass der Substratbruch im Herstellungsprozess vom Messwiderstand gemäß Fig. 1 praktisch ausgeschlossen ist. Der Wärmeausdehnungskoeffizient des Substrats 1 liegt im Bereich von 9,0 bis 11,0 x 10⁻⁶/K.

Auf die Oberfläche 2 des Substrats 1 wird die Widerstandsschicht 3 aus einem Metall der Platingruppe, vorzugsweise Platin, durch Aufdampfen aufgebracht. Die Widerstandsschicht 3 hat zweckmäßigerweise die Form eines Mäanders. Die Oberfläche 2 ist porenfrei und weist eine geringe Rauigkeit von < 1 µm auf. Damit wird eine sehr feine Strukturierung ermöglicht. In einer vorteilhaften Ausführung des Pt1000-Messwiderstandes (Nennwert 1000 Ω bei 0°C) sind Platin-Leiterbahnen 5 µm breit. Darüberhinaus wird eine hohe Reproduzierbarkeit mit einer Standardabweichung von 0,02 % des Nennwertes bei der Serienproduktion erreicht.

Die verhältnismäßig empfindliche und katalytisch aktive Platin-Widerstandsschicht 3 wird durch eine Passivierungsschicht 6 geschützt. Beim Aufbringen der Passivierungsschicht 6 wird im Bereich der Anschlusskontakte 4, 5 der dazugehörige Anschlussbereich freigelassen, d.h. nicht von der Passivierungsschicht 6 abgedeckt. Die Passivierungsschicht 6 besteht aus einer oder mehreren Lagen von Borosilikatglas mit einer Gesamtdicke von 10 bis 100 µm und wird vorzugsweise in Siebdrucktechnik aufgebracht.

Die Anschlusskontakte 4, 5 der Widerstandsschicht 3 werden über Kontaktflächen 7, 8 mit äußeren Anschlussleitungen 9, 10 vorzugsweise durch Thermokompression verbunden. Der Anschlussbereich wird durch eine auf die Kontaktflächen 7, 8 und auf die Passivierungsschicht 6 aufgebrachte äußere Deckschicht 11 aus einem Glaskeramikwerkstoff in einer Dicke von 0,1 bis 5 mm elektrisch isoliert und zugentlastet.

Weiteres Beispiel, das nicht Teil der Erfindung ist:

Ein Saphirsubstrat mit einer 5 nm dicken Platinschicht ist mit 2 nm Gold beschichtet. Gold ist in dieser Schichtstärke nicht mehr eine homogene Schicht, sondern inhomogen auf der Platinschicht belegt mit einer rechnerisch durchschnittlichen Schichtdicke von 2 nm. Die Goldschicht ist maßgeblich für die Leitfähigkeit und damit auch die Umgebung der Goldschicht. Diese Goldschicht weist eine besonders hohe Sensitivität bezüglich organischer Moleküle auf ihrer der Platinschicht entgegengesetzten Seite auf. In einer bevorzugten Ausführung wird auf der Goldschicht eine weitere Schicht aufgetragen, insbesondere aus organischen Molekülen, die durch Wechselwirkung mit anderen Stoffen die Sensitivität verbessert. Hierbei wird einerseits die Sensitivität bestimmter Stoffe erhöht und andererseits die Bandbreite der sensitiv messbaren Stoffe erhöht. Beispielsweise wird mit einer Tierharnstoffschicht die pH-Sensitivität des Sensors gesteigert.

In einer weiteren bevorzugten Ausführung wird die Konkurrenzreaktion unterschiedlicher Adsorbate an der Goldfläche dadurch ausgenutzt, dass die Änderung der Leitfähigkeit bei der Belegung mit einem Stoff, wie z. B. Cystein, auch davon abhängt, wie weit bereits eine Belegung durch konkurrierende Adsorbate vorhanden ist. Insbesondere ermöglicht diese letzte Technik neben der qualitativen Bestimmung auch eine besonders gute quantitative Bestimmung.

## Patentansprüche

1. Widerstandsthermometer mit einem Messwiderstand in Form einer 0,1 bis 10 µm dicken strukturierten Platinschicht, die auf einer elektrisch isolierenden Oberfläche (2) eines Substrats (1) aufgebracht ist und mit einer elektrisch isolierenden Abdeckschicht versehen ist, wobei das Substrat (1) oder dessen Oberfläche (2) Zirconiumdioxid enthält,
**dadurch gekennzeichnet, dass** das Zirconiumdioxid mit Oxiden eines drei und eines fünfwertigen Metalls stabilisiert ist mit einem Gehalt von 20-40 Mol-% Stabilisator, bezogen auf den gesamten Metallgehalt, und wobei das dreiwertige Metall Yttrium ist, und das fünfwertige Metall Tantal oder Niob ist.

2. Verfahren zur Massenproduktion von Widerstandsthermometern mit hoher und reproduzierbar Messgenauigkeit, bei dem auf einem elektrisch isolierenden Substrat (1) mit einem Wärmeausdehnungskoeffizienten im Bereich von 8,5 bis 10,5 x 10-6/K und einer Rauigkeit unter 1 µm eine strukturierte 0,1 bis 10 µm dicke Platinschicht aufgebracht wird, und die strukturierte Platinschicht elektrisch isolierend abgedeckt wird, wobei das Substrat (1) oder dessen Oberfläche (2) Zirconiumdioxid enthält, **dadurch gekennzeichnet, dass** das Zirconiumdioxid mit Oxiden eines drei und eines fünfwertigen Metalls stabilisiert ist mit einem Gehalt von 20-40 Mol-% Stabilisator, bezogen auf den gesamten Metallgehalt, und wobei das dreiwertige Metall Yttrium ist, und das fünfwertige Metall Tantal oder Niob ist.

3. Verwendung eines Widerstandsthermometers nach Anspruch 1 oder hergestellt nach Anspruch 2 für Temperaturmessungen über 500°C.

4. Verwendung eines Widerstandsthermometers nach Anspruch 3 als Sensor einer Abgasbehandlungsanlage.

## Claims

1. Resistance thermometer with a measuring resistance in the form of a 0.1 to 10 µm thick structured platinum layer being deposited on an electrically insulating surface (2) of a substrate (1) and provided with an electrically insulating covering layer, where the substrate (1) or its surface (2) contains zirconium dioxide,
**characterized in that** the zirconium dioxide ist stabilized with oxides of a trivalent and a pentavalent metal with a content of 20-40 mol% stabilizer based on the total metal content, and where the trivalent metal is yttrium and the pentavalent metal is tantalum or niobium.

2. Method for the mass production of resistance thermometers with a high and reproducible accuracy of measurement, where a structured 0.1 to 10 µm thick platinum layer is deposited on an electrically insulating substrate (1) with a thermal expansion coefficient in the range from 8.5 to 10.5. 10⁻⁶ K⁻¹ and a roughness of less than 1 µm and the structured platinum layer is electrically insulating covered, where the substrate (1) or its surface (2) contains zirconium dioxide,
**characterized in that** the zirconium dioxide ist stabilized with oxides of a trivalent and a pentavalent metal with a content of 20-40 mol% stabilizer based on the total metal content, and where the trivalent metal is yttrium and the pentavalent metal is tantalum or niobium.

3. Usage of a resistance thermometer according to claim 1 or made according to claim 2 for temperature measurements higher than 500 °C.

4. Usage of a resistance thermometer according to claim 3 as a sensor of an air pollution control apparatus.

## Revendications

1. Thermomètre à résistance électrique avec une résistance de mesure sous forme d'une couche de platine structurée épaisse de 0,1 à 10 µm qui est appliquée sur une surface électriquement isolante (2) d'un substrat (1) et est pourvue d'une couche de recouvrement électriquement isolante, dans lequel le substrat (1) ou sa surface (2) contient du dioxyde de zirconium,
**caractérisé en ce que** le dioxyde de zirconium est stabilisé avec des oxydes d'un métal trivalent et d'un métal pentavalent avec une teneur de 20 à 40 % en mole de stabilisateur, par rapport à la teneur métallique totale, et dans lequel le métal trivalent est l'yttrium et le métal pentavalent est le tantale ou le niobium.

2. Procédé de production de masse de thermomètres à résistance électrique avec une précision de mesure élevée et reproductible, lors duquel une couche de platine structurée épaisse de 0,1 à 10 µm est appliquée sur un substrat électriquement isolant (1) avec un coefficient de dilatation thermique dans la région de 8,5 à 10,5 x 10-6/K et une rugosité en dessous de 1 µm, et la couche de platine structurée est recouverte de manière électriquement isolante, dans lequel le substrat (1) ou sa surface (2) contient du dioxyde de zirconium, **caractérisé en ce que** le dioxyde de zirconium est stabilisé avec des oxydes d'un métal trivalent et d'un métal pentavalent avec une teneur de 20 à 40 % en mole de stabilisateur, par rapport à la teneur métallique totale, et dans lequel le métal trivalent est l'yttrium et le métal pentavalent est le tantale ou le niobium.

3. Utilisation d'un thermomètre à résistance électrique selon la revendication 1 ou fabriqué selon la revendication 2 pour des mesures de température au-dessus de 500°C.

4. Utilisation d'un thermomètre à résistance électrique selon la revendication 3 comme capteur d'une installation de traitement de gaz d'échappement.
